**Europäisches Patentamt**

**European Patent Office**

**Office européen des brevets**

(19)

(11) Veröffentlichungsnummer : **0 395 855 B1**

(12)

# EUROPÄISCHE PATENTSCHRIFT

(45) Veröffentlichungstag der Patentschrift :
**08.07.92 Patentblatt 92/28**

(51) Int. Cl.$^5$ : **B65G 47/46, B65G 47/49**

(21) Anmeldenummer : **90104354.7**

(22) Anmeldetag : **07.03.90**

(54) Verfahren und Vorrichtung zum Verteilen von Kleinteilen, wie Glasbruchstücken.

(30) Priorität : **29.04.89 DE 3914360**

(43) Veröffentlichungstag der Anmeldung :
**07.11.90 Patentblatt 90/45**

(45) Bekanntmachung des Hinweises auf die
Patenterteilung :
**08.07.92 Patentblatt 92/28**

(84) Benannte Vertragsstaaten :
**AT BE CH DE DK ES FR GB GR IT LI LU NL SE**

(56) Entgegenhaltungen :
**DE-A- 3 524 860**

(73) Patentinhaber : **Exner, Hubertus
Am Zauberberg 2A
W-3388 Bad Harzburg 1 (DE)**
Patentinhaber : **Seifert, Lothar
Nordhäuser Strasse 16a
W-3388 Bad Harzburg (DE)**

(72) Erfinder : **Exner, Hubertus
Am Zauberberg 2A
W-3388 Bad Harzburg 1 (DE)**
Erfinder : **Seifert, Lothar
Nordhäuser Strasse 16a
W-3388 Bad Harzburg (DE)**

(74) Vertreter : **Einsel, Martin et al
Dr.R. Döring, Dr.J. Fricke, M.Einsel
Jasperallee 1a
W-3300 Braunschweig (DE)**

## Beschreibung

Die Erfindung betrifft ein Verfahren und eine Vorrichtung zum Verteilen von Kleinteilen, wie Glasbruchstücken, aus einem großen Zufuhrstrom auf mehrere Förderströme mittels eines Zufuhrkanals und mehrerer von dem Zufuhrkanal abzweigender Förderkanäle.

Die DE-A-30 07 889 beschreibt eine insbesondere im Bergbau einzusetzende Vorrichtung, mit der erzhaltige oder radioaktive Erze aus einem kontinuierlichen Strom von Partikeln ausgesondert werden. Zu diesem Zweck wird die Eigenschaft der Partikel bereichsweise und/oder streifenweise über die Breite der Transportvorrichtung nachgewiesen. Dabei kommt es nicht so darauf an, daß evtl. nichterzhaltige Partikel doch einer Auswertung zugeführt werden oder umgekehrt das eine oder andere erzhaltige Material der Auswertung verlorengeht. Die auszusondernden Erze werden mit Druckluft beaufschlagt und auf diese Weise beim Herabfallen von einem Förderband in ihrer Richtung beeinflußt.

Bei einer Reihe von Anwendungsfällen ist dieses Verfahren jedoch nicht ausreichend. Kleinteile, die in einem einzigen großen Zufuhrstrom angeliefert werden, müssen vor einer etwaigen Sortierung oder sonstigen Verarbeitung auf mehrere kleine Förderströme verteilt werden. Dies ist beispielsweise dann der Fall, wenn diese Sortierungs- oder sonstige Verarbeitungseinrichtung nicht den gesamten Zufuhrstrom, sondern nur einen Teilstrom verarbeiten kann. In solchen Fällen müssen mehrere Sortierungs- oder Verarbeitungseinrichtungen eingesetzt und der Zufuhrstrom entsprechend auf zu den jeweiligen Einrichtungen führende Förderströme aufgeteilt werden.

Ein solcher Anwendungsfall ist beispielsweise bei der Sortierung von Altglasbruchstücken gegeben. Diese liegen häufig in verschiedenen Farben (grün, braun, farblos) vor und müssen Sortiereinrichtungen zugeführt werden, die eine Klassifizierung der Glasbruchstücke zur Wiederverwendung vornehmen. Diese Sortiereinrichtungen arbeiten u.a. auf optischer Basis mit Absorptionsmessungen. Um korrekte Werte zu erhalten, darf nur jeweils ein Glasbruchstück die Sortiereinrichtung zu einem vorbestimmten Zeitpunkt erreichen oder passieren. Um trotzdem mit einer solchen Sortieranlage eine große Menge Altglasbruchstücke bearbeiten zu können, muß eine Sortierung parallel in mehreren Einrichtungen erfolgen, auf die aus einem großen Zufuhrstrom die jeweiligen Bruchstücke verteilt werden.

U.a. ist aus der DE 35 24 860 A1 ein sog. Schneckenförderer mit schraubenförmig ansteigender Förderrampe und schräg zur Förderrichtung verlaufender Abwurfkante bekannt. Dies ist eine im Stand der Technik vielfach verwendete Vereinzelungseinrichtung, die eingesetzt werden muß, ehe der eigentliche selektive Sortiervorgang beginnt. Schneckenförderer bedingen einen verhältnismäßig kostenintensiven Aufbau, da neben der Rotations- auch eine gleichmäßige Vibrationsbewegung auf die Schnecke übertragen werden muß, die ihrerseits eine verhältnismäßig präzise Fertigung erfordert, obwohl sie beispielsweise bei einer Vereinzelung von Glasbruchstücken oder auch Schrotteilchen starken mechanischen Beanspruchungen ausgesetzt ist. Darüber hinaus sind damit auch nur kleine Mengen zu verarbeiten, so daß bei der Sortierung von Billigteilen und Massenprodukten derartige Anlagen unwirtschaftlich werden.

Eine andere Vereinzelungseinrichtung ist auch in einer Einrichtung gemäß dem DE 87 06 655 U1 eingeschaltet, nämlich eine Konstruktion aus zwei Drehtellern, in denen die zu vereinzelnden Gegenstände eine Reihe bilden. Diese ausgesprochen kostenaufwendige Einrichtung dient zur Sortierung von Arzneimitteln, Kapseln, Tabletten und insbesondere von Weich-Gelatine-Kapseln. Diese zu sortierenden Partikel üben nur eine verhältnismäßig geringe mechanische Beanspruchung auf die Einrichtungen aus.

Ein Beispiel für die Behandlung bereits vereinzelter Objekte ist in der GB-PS 1 215 559 dargestellt. Eine Lichtquelle sendet einen Lichtstrahl auf ein Paket, welches eine Sensorstation auf dem Förderband durchläuft. Der Lichtstrahl wird gegen eine Fotozelleneinrichtung reflektiert, die ihrerseits bei fehlender Identifikation, bei der Feststellung von Fehlfarben oder bei einer verkehrten Lage des Paketes ein Signal an ein Ventil abgibt, das dann über Blasdüsen dieses fehlerhafte Objekt vom Förderband entfernt. Das Funktionieren einer solchen Vorrichtung hängt wesentlich davon ab, daß ihm bereits vereinzelte und ausgerichtete Objekte zugeführt werden.

Abweichend von diesem im druckschriftlichen Stand der Technik genannten Verfahren könnte auch versucht werden, durch den Aufbau von Zwischenwänden in den Zufuhrstrom der Objekte eine Verteilung vorzunehmen. Dies führt jedoch zu einer rein zufälligen Verteilung und liefert nur unbefriedigende Ergebnisse, vor allem bei unregelmäßig geformten Kleinteilen.

Bereits durch geringfügigste Neigungen entsteht eine Bevorzugung bestimmter Förderkanäle entweder am linken oder rechten Rand. Bei fortdauernder Benutzung entstehen auch durch Kerben oder Beschädigungen am Eingang der Förderkanäle Hindernisse, wenn auch geringfügiger Natur, die zu einer Benachteiligung des entsprechenden Förderkanals führen. Auch die Belegungsstruktur im Zufuhrstrom ist nicht notwendigerweise gleichmäßig und hängt von der Aufgabe der jeweiligen Kleinteile in den Zufuhrkanal ab.

Eine unregelmäßige Bestückung der Förderkanäle führt jedoch auch zu ungünstiger Auslastung, nämlich zur Überlastung einzelner und zur ungenügenden Auslastung anderer Förderkanäle.

Aufgabe der Erfindung ist es daher, ein Verfahren und eine Vorrichtung zum Verteilen von Kleinteilen aus einem großen Zufuhrstrom auf mehrere Förderströme mittels eines Zufuhrkanals und mehrerer von dem Zufuhrkanal abzweigender Förderkanäle vorzuschlagen, bei der eine gleichmäßige Bestückung der Förderkanäle mit den Kleinteilen erfolgt.

Diese Aufgabe wird bei einem gattungsgemäßen Verfahren dadurch gelöst, daß eine Erkennungseinheit in den Förderkanälen die Frequenz der sie passierenden Kleinteile erkennt und in Abhängigkeit davon ein Signal an eine zugeordnete an der der Abzweigung des jeweiligen Förderkanals gegenüberliegenden Wand des Zufuhrkanals angeordnete Blasdüseneinrichtung abgibt, die in Abhängigkeit von dem Signal ein Fluid ausstößt.

Bei einem derartigen Verfahren entsteht ein Rückkopplungseffekt. Eine Erkennungseinheit stellt fest, ob in einem Förderkanal Kleinteile vorhanden sind. Abhängig von dieser Feststellung wird eine Blasdüseneinrichtung an der der Abzweigung des jeweiligen Förderkanals gegenüberliegenden Wand des Zufuhrkanals veranlaßt, ein Fluid auszustoßen. Dieses Fluid, vorzugsweise Luft, treibt damit die Kleinteile in Richtung des abzweigenden Förderkanals.

Der Regelkreis wird zweckmäßig so eingestellt, daß die Stärke des Fluidstromes um so größer wird, je weniger Kleinteile in dem Förderkanal festgestellt werden. Die Blasdüseneinrichtung stößt das Fluid dann in Abhängigkeit von der Frequenz der Kleinteile aus, mit der diese die Erkennungseinheit im zugeordneten Förderkanal passieren.

Dadurch werden um so mehr Kleinteile in den Förderkanal geblasen, je weniger sich dort zur Zeit befinden. Wird jedoch eine hohe Zahl von Kleinteilen festgestellt, so wird die Stärke des von der Blasdüseneinrichtung abgegebenen Fluidstromes verringert bzw. gar kein Fluid mehr ausgestoßen. Die im Zufuhrkanal befindlichen Kleinteile besitzen dadurch keine Tendenz mehr, an der Abzweigung in den Förderkanal zu gelangen, so daß die Überlastung in dem Förderkanal abgebaut wird.

Die Blasdüsen wirken also nicht etwa auf das Objekt ein, das gerade an der Erkennungseinheit vorbeizieht; eingewirkt wird vielmehr auf diejenigen Teile, die noch nicht vereinzelt sind, sondern vielmehr sich im großen Zufuhrstrom befinden. Es findet also eine Rückkopplung statt. Förderkanäle, in denen eine niedrige Frequenz an den Erkennungseinheiten vorbeizieht, in denen also theoretisch mehr Kleinteile sortiert werden könnten, fordern auf diese Weise automatisch mittels Rückkopplung aus dem Zufuhrstrom ein erhöhtes Kontingent an. Umgekehrt stoppen Förderkanäle mit einer hohen Frequenz und ausgelasteten Sortiereinrichtungen die weitere Zufuhr bzw. vermindern sie. In der Praxis führt dies nach kurzem Anlauf zu einer gleichmäßigen Versorgung mit konstanten Frequenzen in allen Förderkanälen.

Besonders vorteilhaft ist es, wenn die Erkennungseinheiten die Kleinteile durch optische Einwirkung erkennen. Dabei ist etwa an eine Absorptions- oder Reflektionsmessung zu denken. Derartige Messungen sind nicht nur einfach durchzuführen, sie gestatten zugleich auch eine besonders rasche Rückmeldung an die Blasdüseneinrichtung.

Mit einer gattungsgemäßen Vorrichtung wird die obengenannte Aufgabe dadurch gelöst, daß eine Erkennungseinheit in den Förderkanälen vorgesehen ist, daß an der der Abzweigung eines jeden Förderkanals gegenüberliegenden Wand des Zufuhrkanals Blasdüseneinrichtungen zum Ausstoßen von Fluiden angeordnet sind, und daß eine Signalübertragungseinheit zur Übertragung von Signalen von der Erkennungseinheit zur Blasdüseneinrichtung vorgesehen ist.

Mit dieser Vorrichtung kann das erfindungsgemäße Verfahren durchgeführt werden.

Als Signalübertragungseinheit sind dabei elektrische Leitungen vorgesehen, aber auch drahtlose Übertragungen mit Sender und Empfänger oder eine andere Form der Übermittlung ist denkbar. In der Signalübertragungseinheit kann auch eine Datenverarbeitungseinheit vorgesehen sein, die die Meßwerte der Erkennungseinheiten in Befehle für die Blasdüseneinrichtung umsetzt. Diese Datenverarbeitungseinheit kann auch geeignete Maßnahmen treffen, um unerwünschtes Schwingungsverhalten des entstehenden Regelkreises zu verhindern. Verschiedene Programme wären hier denkbar.

Der Zufuhrkanal der erfindungsgemäßen Vorrichtung weist vorzugsweise einen Förderer auf, quer zu dessen Längsrichtung die Förderkanäle in Form von Rutschen angeschlossen sind. Dieser Förderer kann beispielsweise ein angetriebenes Förderband besitzen, mit dem die Kleinteile in Längsrichtung gefördert werden. Durch die Blasdüseneinrichtung werden die Kleinteile von dem Förderer in Querrichtung in die Förderkanäle geblasen, in denen sie auf den Rutschen weitergelangen.

Bevorzugt wird ein Vibrationsförderer eingesetzt. Dadurch sind die Kleinteile besonders leicht mit der Blasdüseneinrichtung beeinflußbar. Außerdem wird dadurch eine gleichmäßige Flächenbeaufschlagung der Zufuhr und Förderkanäle mit den Kleinteilen erreicht, was für die Erkennungseinheiten bei der Erkennung der Kleinteile von Vorteil ist.

Bevorzugt arbeiten dabei die Erkennungseinheiten mit optischer Einwirkung. Sie können dabei Lichtschranken sein, die feststellen, ob und ggf. mit welcher Frequenz Kleinteile durch sie hindurch passieren. Aus dieser Frequenz wird dann ein Signal für die Blasdüseneinrichtung ermittelt, das die Stärke des Fluidausstoßes festlegt.

Die Förderkanäle sollten zum besseren Rutschen mit glattwandigen Böden ausgestattet sein. Ein Belag aus Glas bietet sich insbesondere dann an, wenn die Erkennungseinheiten mit vertikal arbeitenden Lichtschranken versehen sind. Ein Belag aus Glas bietet insbesondere auch dann Vorteile, wenn die Kleinteile Glasbruchstücke sind, da Glas auf Glas, insbesondere bei Einfluß von Vibrationsförderern, besonders gut gleitet.

Aus vergleichbaren Gründen wird es ferner bevorzugt, wenn auch der Boden des Zufuhrkanals mit einem Belag aus Glas versehen ist.

Eine technisch einfache und daher bevorzugte Anwendung ist es, wenn die an der der Abzweigung gegenüberliegenden Wand des Zufuhrkanals angeordneten Blasdüseneinrichtungen luftausstoßende Ventile aufweisen. Die Verwendung von Luft als Fluid ist besonders kostengünstig und gleichzeitig für die Funktion hinreichend, wenn nicht spezielle Kleinteile andere Fluide erfordern.

Die Verwendung von Flüssigkeiten als Fluid, etwa von Wasser, ist nur in Einzelfällen wünschenswert, etwa wenn die Kleinteile zugleich abgeschwemmt oder gereinigt werden sollen.

Eine geradlinige Erstreckung des Zufuhrkanals wird bevorzugt, schon um einfache Förderer oder Förderbänder einsetzen zu können. Wenn die von dem Zufuhrkanal abzweigenden Kanäle in gleichmäßigen Abständen auf der gleichen Seite abzweigen, so vereinfacht dies die Zusammenführung der Kleinteile, wenn sie im Anschluß an etwa eine Sortierung in innerhalb der Förderkanäle vorgesehenen Einrichtungen wieder gemeinsam weitergeführt werden sollen, dies ist bei Glasbruchstücken etwa der Fall, wenn alle gleichfarbigen Glasbruchstücke nach dem Sortiervorgang einem gemeinsamen Behälter zugeführt werden sollen.

In diesem Falle ist es auch bevorzugt, wenn der Boden des Zufuhrkanals zu den abzweigenden Förderkanälen hin geneigt ist. Dies unterstützt die Funktion der Blasdüseneinrichtung.

Alternativ kann der Zufuhrkanal sich zwar geradlinig erstrecken, aber die von ihm abzweigenden Förderkanäle in gleichmäßigen Abständen gegensinnig zueinander versetzt abzweigen.

Dies ermöglicht eine größere Zahl von Förderkanälen auf gleicher Zufuhrkanallänge, wenn aus irgendwelchen Gründen der Raum um die Förderkanäle beschränkt ist. Diese Lösung bietet auch den Vorteil, daß keine einseitigen Tendenzen innerhalb des Zufuhrkanals entstehen, so daß nicht etwa auf der den Förderkanälen abgewandten Seite sich Kleinteile mit bestimmten Eigenschaften bevorzugt ansammeln.

In einer speziellen Ausführungsform ist ein Rückfuhrkanal vorgesehen, der das Ende des Zufuhrkanals mit einem Wiederaufgabepunkt verbindet. Dieser Rückfuhrkanal sorgt dafür, daß Kleinteile, die nicht durch die Blasdüseneinrichtungen in irgendeinen der Förderkanäle geführt worden sind, am Ende des Zufuhrkanals nicht gesammelt werden müssen, sondern statt dessen erneut dem Zufuhrkanal zugeführt und in einem weiteren Durchgang einem der Förderkanäle zugeführt werden können. Durch eine solche Maßnahme können auch kurzfristige Schwankungen in der Belegung des Zufuhrkanals ausgeglichen werden, die nicht von den Förderkanälen aufgenommen werden.

Zum Verteilen von Kleinteilen sind bisher anstelle von Zufuhrkanälen und Förderkanälen meist kreisringförmige Behälter mit eingebauten Schikanen eingesetzt werden. Diese Behälter sind in Rotationsbewegungen versetzt worden, und die Schikanen sollten für einen regelmäßigen Austrag der Kleinteile sorgen. Problematisch bei derartigen Konstruktionen sind die u.U. beträchtlichen Massen, die in dem rotierenden Behälter gefördert werden müssen. Problematisch dabei ist auch, daß die Kleinteile eine nicht unbeträchtliche Relativgeschwindigkeit beim Verlassen des Behälters haben. Diese muß bei der Weiterförderung berücksichtigt werden.

Demgegenüber ist die erfindungsgemäße Konstruktion sehr viel einfacher und zuverlässiger; zugleich gestattet sie bei auftretenden Ausfällen einzelner Förderkanäle ein problemloses Einschränken bzw. Abstoppen der Zufuhr der Kleinteile in diese Kanäle, indem die entsprechende Blasdüseneinrichtung einfach abgestellt wird.

Im folgenden wird anhand der Zeichnung ein Ausführungsbeispiel der Erfindung im einzelnen erläutert.

Es zeigen:

Fig. 1 eine schematische Seitenansicht der Vorrichtung,
Fig. 2 eine Draufsicht auf die Vorrichtung aus Fig. 1,
Fig. 3 einen Schnitt längs der Linie C-C und
Fig. 4 einen Schnitt längs der Linie A-A aus Fig.2.

In einen schematisch angedeuteten Fülltrichter 10 werden die Kleinteile, etwa Glasbruchstücke, eingegeben. Aus dem Trichter gelangen sie auf eine Fördereinrichtung. Diese Fördereinrichtung besitzt zwei Rollen 11,12, um die ein Förderband 13 läuft. Dieses Förderband 13 führt die Kleinteile der Vorrichtung 20 zum Verteilen zu.

Die Kleinteile fallen über die obere Rolle 12 mit dem Förderband 13 in einen Zufuhrkanal 30.

Die Vorrichtung 20 zum Verteilen der Kleinteile ruht mit dem Zufuhrkanal 30 und weiteren Bauteilen auf einem Tisch 22 mit Tischbeinen 23, der auf dem Boden 24 steht.

Der Zufuhrkanal 30 ruht mit Stützen 31 auf dem Tisch 22. Der Zufuhrkanal 30 besitzt zwei Seitenwände 36,37 und einen Boden 38, der mit einem Belag aus Glas 39 versehen ist, vgl. Fig. 3.

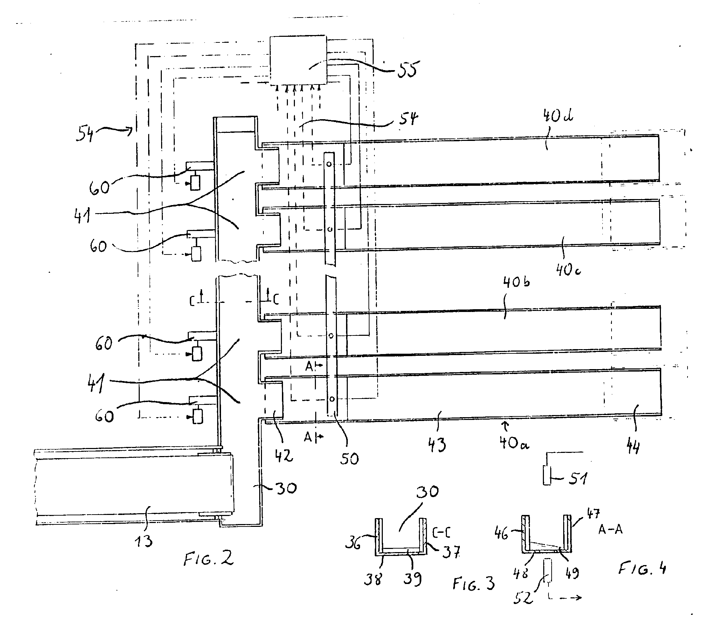

In gleichmäßigen Abständen ist die rechte Seitenwand 37 des Zufuhrkanals 30 unterbrochen. Dort zweigen Förderkanäle 40 ab. In Fig. 2 sind vier dieser Förderkanäle 40 dargestellt, nämlich die ersten beiden Förderkanäle 40a,40b und die letzten Förderkanäle 40c,40d. Zwischen diesen kann eine beliebige weitere Anzahl vorgesehen werden. Die Zahl der insgesamt vorzusehenden Förderkanäle 40 hängt von dem Verhältnis der Förderkapazität des Zufuhrkanals 30 zu dem der einzelnen Förderkanäle 40 ab.

Die Förderkanäle 40 sind etwa gleichgeformt, die Abzweigungen 41 liegen längs der geradlinigen Erstreckung des Zufuhrkanals 30.

Jeder Förderkanal 40 besitzt im dargestellten Beispiel einen oberen Abschnitt 42, der noch einstückig mit dem Zufuhrkanal 30 ausgebildet ist, einen mittleren Abschnitt 43 und einen unteren Abschnitt 44. In dem mittleren Abschnitt 43 kann eine Vereinzelung der Kleinteile vorgenommen werden, falls dies erforderlich ist. Es kann beispielsweise über verschiedene Schikanen dafür gesorgt werden, daß nicht mehrere Glasbruchstücke übereinander befördert werden, falls dies für eine spätere Sortierung unerwünscht ist.

Der untere Abschnitt 44 dient der Zufuhr zu einer Verarbeitungseinrichtung, etwa bei Glasbruchstücken einer Sortiereinheit.

Die Förderkanäle 40 besitzen jeweils zwei Seitenwände 46,47 und einen Boden 48, der vorzugsweise mit einem Belag aus Glas 49 versehen ist.

Im mittleren Abschnitt 43 der Förderkanäle 40 sind jeweils Erkennungseinheiten 50 vorgesehen. In dem dargestellten Beispiel bestehen die Erkennungseinheiten 50 aus einem Lichtsender 51 und einem Lichtempfänger oder Sensor 52. Diese sind zweckmäßig oberhalb bzw. unterhalb des Bodens 48 des Förderkanals 40 angeordnet.

Die Erkennungseinheit 50 stellt fest, ob die von Lichtsender 51 und Sensor 52 gebildete Lichtschranke von einem Kleinteil unterbrochen wird und sendet in Abhängigkeit davon ein Signal über eine Signalübertragungseinheit 54 an eine Datenverarbeitungseinheit 55. Diese Datenverarbeitungseinheit 55 ermittelt aus den ihr zugehenden Werten, in welchen Förderkanälen jeweils aktuell welche Kleinteilfrequenz herrscht.

In Abhängigkeit von diesen Meßwerten übermittelt sie Befehle an Blasdüseneinrichtungen 60.

Diese Blasdüseneinrichtungen 60 sind jeweils an den Abzweigungen 41 angeordnet, und zwar jeweils an der Seitenwand 36, die den Förderkanälen 40 gegenüberliegt. Für jeden Förderkanal 40 ist eine Blasdüseneinrichtung 60 vorgesehen. Die Blasdüseneinrichtung weist einen Empfänger der Signalübertragungseinheit 54 und ein luftausstoßendes Ventil auf.

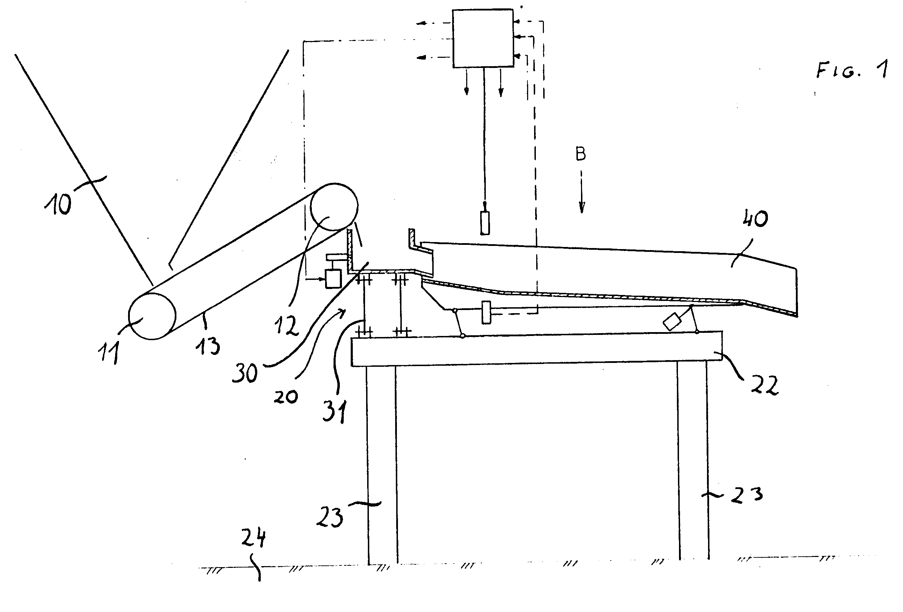

Die Funktionsweise ist wie folgt: Die Kleinteile werden über den Fülltrichter 10 auf das Förderband 13 gegeben. Von dort gelangen sie in den Zufuhrkanal 30 der Vorrichtung zum Verteilen 20. Dieser Zufuhrkanal 30 besitzt einen nicht dargestellten Förderer, der die Kleinteile in Fig. 1 in die Bildebene hineinfördert, dies würde in Fig. 2 einer Laufrichtung von unten nach oben entsprechen. Während dieses Laufes kommen die Kleinteile an den Abzweigungen 41 der Förderkanäle 40 vorbei. In dem Moment, in dem die Kleinteile eine Abzweigung 41 passieren, deren Förderkanal gerade verhältnismäßig wenig Kleinteile aufweist, werden sie einem Fluidausstoß der Blasdüseneinrichtung 60 ausgesetzt und rutschen so in den obersten Abschnitt 42 des entsprechenden Förderkanals 40. Von dort gelangen sie weiter zum mittleren Abschnitt 43 und passieren die Erkennungseinheit mit Lichtsender 51 und Lichtempfänger bzw. Sensor 52. Der Sensor 52 erkennt das Kleinteil und übermittelt ein entsprechendes Signal über die Signalübertragungseinheit an die Datenverarbeitungseinheit 55. Diese veranlaßt dementsprechend, daß die Blasdüseneinrichtung 60 den Fluidausstoß verringert bzw. einstellt. Das Kleinteil bewegt sich währenddessen weiter in Richtung des unteren Abschnitts 44 und zu anschließenden Verarbeitungseinrichtungen.

Natürlich reagieren die Erkennungseinheiten 50 in der Praxis nicht jeweils auf einzelne Kleinteile, sondern sie mitteln über die Zahl der Kleinteile pro Zeiteinheit, die erfaßt werden. Durch entsprechende Programme in der Datenverarbeitungseinheit 55 kann dementsprechend eine etwa kontinuierliche Beaufschlagung der Kleinteile im Zufuhrkanal 30 erzielt werden, so daß alle Förderkanäle 40 gleich viel Kleinteile erhalten. Sowie Abweichungen entstehen, werden diese durch die Blasdüseneinrichtungen 60 ausgeglichen. Dies ist insbesondere wichtig bei Kleinteilen unregelmäßiger Form.

**Patentansprüche**

1. Verfahren zum Verteilen von Kleinteilen, wie Glasbruchstücken aus einem großen Zufuhrstrom auf mehrere Förderströme mittels eines Zufuhrkanals und mehrerer von dem Zufuhrkanal abzweigender Förderkanäle, **dadurch gekennzeichnet,** daß eine Erkennungseinheit (50) in den Förderkanälen (40a bis 40d) die Frequenz der sie passierenden Kleinteile erkennt und in Abhängigkeit davon ein Signal an eine zugeordnete an der der Abzweigung (41) des jeweiligen Förderkanals (40) gegenüberliegenden Wand (36) des Zufuhrkanals (30) angeordnete Blasdüseneinrichtung (60) abgibt, die in Abhängigkeit von dem Signal ein Fluid ausstößt.

2. Verfahren nach Anspruch 1, **dadurch gekennzeichnet,** daß die Erkennungseinheiten (50) die Frequenz der passierenden Kleinteile durch optische Einwirkung erkennen.

3. Verfahren nach Anspruch 1 oder 2, **dadurch gekennzeichnet,** daß die Blasdüseneinrichtung (60) umso mehr Fluid ausstößt, je niedriger die Frequenz der an der Erkennungseinheit (50) im zugeordneten Förderkanal (40) passierenden Kleinteile ist.

4. Vorrichtung zum Verteilen von Kleinteilen, wie Glasbruchstücken, aus einem großen Zufuhrstrom auf mehrere Förderströme mit einem Zufuhrkanal und mehreren von dem Zufuhrkanal abzweigenden Förderkanälen, **dadurch gekennzeichnet,** daß eine Erkennungseinheit (50) in den Förderkanälen (40) vorgesehen ist, daß an der der Abzweigung eines jeden Förderkanals gegenüberliegenden Wand des Zufuhrkanals Blasdüseneinrichtungen (60) zum Ausstoßen von Fluiden angeordnet sind, und daß eine Signalübertragungseinheit (54) zur Übertragung von Signalen von der Erkennungseinheit (50) zur Blasdüseneinrichtung (60) vorgesehen ist.

5. Vorrichtung nach Anspruch 4, **dadurch gekennzeichnet,** daß der Zufuhrkanal (30) einen Förderer aufweist, quer zu dessen Längsrichtung die Förderkanäle (40) in Form von Rutschen angeschlossen sind.

6. Vorrichtung nach Anspruch 4 oder 5, **gekennzeichnet durch** einen Vibrationsförderer.

7. Vorrichtung nach einem der Ansprüche 4 bis 6, **dadurch gekennzeichnet,** daß die Erkennungseinheiten (50) mit optischer Einwirkung arbeiten.

8. Vorrichtung nach Anspruch 7, **dadurch gekennzeichnet,** daß die Erkennungseinheiten (50) Lichtschranken sind.

9. Vorrichtung nach einem der Ansprüche 4 bis 8, **dadurch gekennzeichnet,** daß die Förderkanäle (40) mit glattwandigen Böden, etwa einem Belag (49) aus Glas, ausgestattet sind.

10. Vorrichtung nach einem der Ansprücher 4 bis 9, **dadurch gekennzeichnet,** daß die an der der Abzweigung (41) gegenüberliegenden Wand (36) des Zufuhrkanals (30) angeordneten Blasdüseneinrichtungen (60) luftausstoßende Ventile aufweisen.

11. Vorrichtung nach einem der Ansprüche 4 bis 10, **dadurch gekennzeichnet,** daß der Zufuhrkanal (30) sich geradlinig erstreckt und die von ihm abzweigenden Kanäle (40) in gleichmäßigen Abständen auf der gleichen Seite (37) abzweigen.

12. Vorrichtung nach Anspruch 11, **dadurch gekennzeichnet,** daß der Boden (38) des Zufuhrkanals zu den abzweigenden Förderkanälen (40) hin geneigt ist.

13. Vorrichtung nach einem der Ansprüche 4 bis 10, **dadurch gekennzeichnet,** daß der Zufuhrkanal sich geradlinig erstreckt und die von ihm abzweigenden Förderkanäle (40) in gleichmäßigen Abständen gegensinnig zueinander versetzt abwechselnd abzweigen.

14. Vorrichtung nach einem der Ansprüche 4 bis 13, **dadurch gekennzeichnet,** daß der Boden (38) des Zufuhrkanals (30) mit einem Belag (39) aus Glas versehen ist.

15. Vorrichtung nach einem der Ansprüche 4 bis 14, **dadurch gekennzeichnet,** daß ein Rückfuhrkanal vorgesehen ist, der das Ende des Zufuhrkanals mit einem Wiederaufgabepunkt verbindet.

## Claims

1. Method for the distribution of small parts, such as glass fragments, out of a large feed flow into a plurality of conveying flows by means of a feed channel and a plurality of conveying channels branching off from the feed channel, **characterised in that** a detection unit (50) in the conveying channels (40a to 40d) detects the frequency of the small parts passing it and as a function thereof emits a signal to an associated blast nozzle device (60) arranged on the wall (36) of the feed channel (30), namely the wall (36) lying opposite the branching point (41) of the respective conveying channel (30), said blast nozzle device (60) ejecting a fluid as a function of the signal.

2. Method according to claim 1, **characterised in that** the detection units (50) detect the frequency of the passing small parts by optical action.

3. Method according to claim 1 or 2, **characterised in that** the blast nozzle device (60) ejects proportionately more fluid the lower the frequency of the small parts passing by the detection unit (50) in the associated conveying channel (40) is.

4. Apparatus for the distribution of small parts, such as glass fragments, out of a large feed flow into a plurality of conveying flows with a feed channel and a plurality of conveying flows branching off from the feed channel, **characterised in that** a detection unit (50) is provided in the conveying channels (40), that on the wall of the feed channel, namely the wall lying opposite the branching point of each individual conveying channel, blast nozzle devices (60) for the ejection of fluids are arranged, and that a signal transmission unit (54) is provided for the transmission of signals from the detection unit (50) to the blast nozzle device (60).

5. Apparatus according to claim 4, **characterised in that** the feed channel (30) has a conveyor transversely to whose longitudinal direction the conveying channels (40) are connected in the form of chutes.

6. Apparatus according to claim 4 or 5, **characterised** by a vibration conveyor.

7. Apparatus according to any one of claims 4 to 6, **characterised in that** the detection units (50) work with optical action.

8. Apparatus according to claim 7, **characterised in that** the detection units (50) are light barriers.

9. Apparatus according to any one of claims 4 to 8, **characterised in that** the conveying channels (40) are equipped with smooth-walled bottoms, such as a covering (49) of glass.

10. Apparatus according to any one of claims 4 to 9, **characterised in that** the blast nozzle devices (60) arranged on the wall (36) of the feed channel (30), namely the wall (36) lying opposite the branching point (41), have air-expelling valves.

11. Apparatus according to any one of claims 4 to 10, **characterised in that** the feed channel (30) extends in a straight line and the channels (40) branching off from it branch off at uniform intervals on the same side (37).

12. Apparatus according to claim 11, **characterised in that** the bottom (38) of the feed channel is inclined towards the branching-off conveying channels (40).

13. Apparatus according to any one of claims 4 to 10, **characterised in that** the feed channel extends in a straight line and the conveying channels (40) branching off from it branch off at uniform intervals alternately offset from one another in opposite directions.

14. Apparatus according to any one of claims 4 to 13, **characterised in that** the bottom (38) of the feed channel (30) is provided with a covering (39) of glass.

15. Apparatus according to any one of claims 4 to 14, **characterised in that** a return channel is provided, which connects the end of the feed channel with a re-delivery point.

## Revendications

1. Procédé pour répartir sur plusieurs flux de convoyage, à partir d'un grand flux d'arrivée, des petites pièces telles que des tessons de verre, au moyen d'un canal d'amenée et de plusieurs canaux de convoyage bifurquant dudit canal d'amenée, **caractérisé par le fait** que, dans les canaux de convoyage (40a à 40d), une unité d'identification (50) identifie la fréquence des petites pièces qui la franchissent et délivre, sur cette base, un signal à un appareil associé (60) à buses soufflantes, qui est disposé sur la paroi (36) du canal d'amenée (30) située en vis-à-vis de la fiburcation (41) du canal de convoyage (40) considéré, et qui projette un fluide en fonction du signal.

2. Procédé selon la revendication 1, **caractérisé par le fait** que les unités d'identification (50) identifient, par effet optique, la fréquence des petites pièces en défilement.

3. Procédé selon la revendication 1 ou 2, **caractérisé par le fait** que l'appareil (60) à buses soufflantes projette une quantité de fluide d'autant plus grande que la fréquence des petites pièces, passant en regard de l'unité d'identification (50), est basse dans le canal de convoyage (40) associé.

4. Dispositif pour répartir sur plusieurs flux de convoyage, à partir d'un grand flux d'arrivée, des petites pièces telles que des tessons de verre, comportant un canal d'amenée et plusieurs canaux de convoyage bifurquant dudit canal d'amenée, **caractérisé par le fait** qu'une unité d'ideniification (50) est prévue dans les canaux de convoyage (40) ; par le fait que des appareils (60) à buses soufflantes, conçus pour projeter des fluides, sont disposés sur la paroi du canal d'amenée qui est située en vis-à-vis de la bifurcation de chaque canal de convoyage ; et par le fait qu'une unité (54) de transmission de signaux est prévue pour transmettre des signaux à l'appareil (60) à buses soufflantes, à partir de l'unité d'identification (50).

5. Dispositif selon la revendication 4, **caractérisé par le fait** que le canal d'amenée (30) présente un convoyeur, transversalement à la direction longitudinale duquel les canaux de convoyage (40) sont rattachés sous la forme de goulottes.

6. Dispositif selon la revendication 4 ou 5, **caractérisé** par un convoyeur vibrant.

7. Dispositif selon l'une des revendications 4 à 6, **caractérisé par le fait** que les unités d'identification (50) fonctionnent par effet optique.

8. Dispositif selon la revendication 7, **caractérisé par le fait** que les unités d'identification (50) sont des barrières photo-électriques.

9. Dispositif selon l'une des revendications 4 à 8, **caractérisé par le fait** que les canaux de convoyage (40) sont pourvus de fonds à parois lisses, par exemple d'un revêtement (49) en verre.

10. Dispositif selon l'une des revendications 4 à 9, **caractérisé par le fait** que les appareils (60) à buses soufflantes, disposés sur la paroi (36) du canal d'amenée (30) situèe en vis-à-vis de la bifurcation (41), présentent des valves de projection d'air.

11. Dispositif selon l'une des revendications 4 à 10, **caractérisé par le fait** que le canal d'amenée (30) s'étend rectilignement, et les canaux (40) bifurquant de ce canal bifurquent du même côté (37), à des intervalles réguliers.

12. Dispositif selon la revendication 11, **caractérisé par le fait** que le fond (38) du canal d'amenée est incliné en direction des canaux de convoyase (40) bifurquant.

13. Dispositif selon l'une des revendications 4 à 10, **caractérisé par le fait** que le canal d'amenée s'étend rectilisnement, et les canaux de convoyage (40) bifurquant de ce canal bifurquent à des intervalles réguliers, avec décalage mutuel en alternance dans des sens opposés.

14. Dispositif selon l'une des revendications 4 à 13, **caractérisé par le fait** que le fond (38) du canal d'amenée (30) est muni d'un revêtement (39) en verre.

15. Dispositif selon l'une des revendications 4 à 14, **caractérisé** par la présence d'un canal de renvoi, qui relie l'extrémité du canal d'amenée à un point de réalimentation.

Fig. 1

FIG. 2

FIG. 3

FIG. 4

EP 0 395 855 B1